# EUROPEAN PATENT APPLICATION

(11) **EP 2 903 116 A1**
(43) Date of publication of application: **05.08.2015**
(21) Application number: 14004166.6
(22) Date of filing: 11.12.2014
(51) Int. Cl.: H02J 3/14, H02J 13/00

(54) **A METHOD AND SYSTEM FOR CONTROLLING LOW-POWER ELECTRIC ENERGY RECEIVERS**

(30) Priority: 13.12.2013 PL 40651113; 13.12.2013 PL 40651213
(71) Applicant: Akademia Gorniczo-Hutnicza im. Stanislawa Staszica w Krakowie, 30-059 Krakow (PL)
(72) Inventor: Kiluk, Sebastian, 32-406 Zakliczyn 462 (PL)

(57) **Abstract**

The method for controlling receivers consists in that a terminal (T) is included in each controlled receiver (02) in a supply line (01). The terminal (T) is equipped with a switch (12) for admitting power supply to the receiver and with a terminal microcontroller (11) in which a schedule of admission periods and delay times for switching the receiver on is stored. The controlled receiver (02) after the first attempt to switch on, performed by the user, by means of an individual receiver switch (03), comes into operation at the time coinciding with the admission period, and after a delay time, when in the terminal, a circuit supplying the receiver is closed by means of a signal from the microcontroller terminal (11). After the second attempt to switch the receiver on, the circuit supplying the receiver is forced to close. The closure of the circuit supplying the receiver in the second attempt is initiated by means of the individual switch (03) belonging to the receiver. The closure of the circuit supplying the receiver in the second attempt may be initiated by means of the forcing connector (32) belonging to the terminal. The schedule is updated and information about the receiver state is transmitted at a time independent of moments of state changes in the receivers.

The system for controlling has, in a supply line (01) of each receiver, a terminal (T), connected in series, equipped with a terminal microcontroller (11), a switch (12) for admitting power supply to the receiver and a connected measuring block. Furthermore, each terminal has a sampling block (21) and/or a forcing block (31). The terminals are connected by signal lines to a server (S). The sampling block (21) has a sampling connector (22) connecting a sampling power supply unit (23) to the receiver power supply line (01) and is controlled from the terminal microcontroller (11). In the forcing block (31), one contact of the forcing connector (32) is connected to the forcing low-voltage power supply unit (33), and the other to the input of the terminal microcontroller (11).

## Description

### TECHNICAL FIELD

The object of the invention is a method and system for controlling low-power electric energy receivers, in particular equipment of dwellings and small companies. The invention solves the problem of energy saving at the lowest level of recipients by equipping them with individual terminals with the possibility to connect them to constitute small software-controlled systems. The proposed method and system cause changes in the moments of switching the receivers on, according to the original operation schedule, and do not affect the operation time and the moment of switching the receiver off.

### DESCRIPTION OF THE PRIOR ART

Solution entitled: "System and method for monitoring and controlling energy usage by many objects" is known from patent specification WO 02/07365 A2. The method according to the invention consists in providing remote-controlled terminals for controlling at least one electric energy receiver and in remote monitoring of electric energy consumption in each apartment, wherein from the central object, remote terminals can be controlled. Furthermore, the invention provides for switching the receivers on and off by remote terminals from one location on the basis of remote monitoring of energy consumption in many apartments. In this invention, monitoring is performed by detecting current flow and by detecting voltage drops. Monitoring does not interfere with the operation of the electric energy meter. The system, according to this invention, consists of a terminal control system connected to at least one receiver in each apartment, an electric energy meter for each apartment, a network for communication between the control and measuring devices of the central object which communicates remotely and measures the consumption in each apartment. The system has a centralised data centre. The central object communicates with terminals via a communication network for remote control of consumption in each apartment. The control is performed by switching the receiver on or off. The data centre collects measurement data, processes them algorithmically and sends instructions to controllers of the receivers.

System and method for monitoring energy consumption and for reducing standby power is known from patent US2010156666 A1. The solution is intended for devices switched on in the home network. The system comprises at least one power supply point allowing controlling and switching home receivers off and an energy saving server which is attached to the control and energy saving nodes, and collects information about the status of energy consumption in these nodes.

Also, patent specification US5502339 A is known. It presents a solution of the system for controlling power consumption in the user's apartment. In the user's apartment, the devices are detected, and power for each of them is controlled according to the program which comprises a schedule of power level and/or time of day, which is inserted into the program or is controlled by the program supplied by the distributor to achieve dispersion of loads over time.

In a particular embodiment, a programmed computer is in an area that is monitored by the energy supplier through user telephone lines. Changes in the computer program are inserted into the device by the energy company via a telephone line, and signals within and throughout the entire object for detecting and controlling energy consumption are sent to and from the device through a power line. This system comprises circuits capable of storing data representing a plurality of separate intervals of real time during which electric energy consumption is to be controlled, and a circuit also capable of storing data on load limits attributable to a given time interval for each receiver. Circuits connected to each receiver can detect energy consumption for each of them separately, are capable of generating control signals for each of the receivers.

Specification of PL 398341 A1, Method and system for energy consumption management with adaptation to time-varying tariffs, is known. This solution, by acting on virtual objects belonging to one of four categories: connections of networks supplying energy and fuels with the object or energy consumption corrections, or energy generation corrections, or energy accumulation corrections, is characterised in that it is subordinated to obtaining financial benefit resulting from the adaptation of amount and moment of energy consumption to current tariffs and/or market energy costs and/or situation in the supply networks under the assumption that at least some of these conditions depend on time. The object of the application is also an energy management system with adaptation to time-varying tariffs.

### ESSENCE OF THE INVENTION

The essence of the method for controlling low-power electric energy receivers, connected by supply lines to a common energy source and equipped with individual receiver switches, is that a terminal, equipped with a switch for admitting power supply to the receiver and with a circuit of terminal microcontroller with a memory, is included in each controlled receiver in the supply line. In the terminal, a schedule of admission periods and delay times for switching the receiver on is stored. The controlled receiver after the first attempt to switch it on by the user, by means of an individual receiver switch, comes into operation either at the time coinciding with the admission if at the same time, in the terminal, a circuit supplying the receiver is closed, or after a delay time if in the terminal, the circuit supplying the receiver is closed on a signal from the microcontroller terminal. After the second attempt to switch the receiver on, which is initiated not later than after the time of recognising a series of two attempts to switch it on, the circuit supplying the receiver is forced to close with a signal from the terminal microcontroller, and therefore the receiver is forced to start operating.

It is preferred that the closure of the circuit supplying the receiver in the second attempt is initiated by means of an individual switch belonging to the receiver.

It is preferred that the closure of the circuit supplying the receiver in the second attempt is initiated by means of a forcing connector belonging to the terminal, which changes the logic state of the terminal microcontroller input, and thereby power supply is immediately switched on for the receiver.

It is also particularly preferred that the schedule, stored in the terminal, is updated by signals which are transmitted from a server located in/or outside the facility comprising the controlled receivers to the terminal microcontroller in the terminal at a time independent of moments of state changes in the receivers.

It is preferred that the schedule, stored in the terminal, is updated by signals which are transmitted to the terminal by means of a communication link.

It is particularly preferred that information about the receiver state is transmitted from the server to the terminal microcontroller at a time independent of moments of state changes in the receivers.

It is preferred that information about the receiver state is transmitted by communication means from the terminal microcontroller to the server.

Preferably, in the terminal after the first attempt to switch the receiver on, which did not make the receiver start operating, a cyclically repeated sequence of signals causing the closure and opening of contacts of a sampling connector is transmitted from the terminal microcontroller via a line which controls sampling to the contacts of the sampling connector. Thereby, the circuit supplying the receiver with sampling voltage is closed and opened. At this time, current lout flowing through the circuit supplying the receiver with sampling voltage is measured by a meter. If during any of the aforementioned cycles of switching the sampling connector on, the flow of current Iout>Istandby is not found, this state will be interpreted as detection of opening of the circuit supplying the receiver, and the source of sampling voltage is disconnected from the receiver contacts. Then, a signal switching the power supply on is transmitted from the terminal microcontroller by means of a power supply control signal line to the control contacts of the switch for admitting power supply. Then, if the contacts of the receiver switch are closed again within less than the time of recognising a series of two attempts to switch it on, the circuit supplying the receiver is closed, and the terminal microcontroller does not change the power supply control signal until the end of the receiver operation.

Preferably, in a different situation, in the terminal after the first attempt to switch the receiver on, which did not make the receiver start operating, a cyclically repeated sequence of signals forcing the closure and opening of the contacts of the sampling connector is transmitted from the terminal microcontroller via a line which controls sampling to the control contacts of the sampling connector, and thereby the circuit supplying the receiver with sampling voltage is closed and opened. At this time, current lout flowing through the circuit supplying the receiver with sampling voltage is measured. If during each of the aforementioned cycles of switching the sampling connector on, the flow of current Iout>Istandby, resulting from the applied sampling voltage, is found, this state will be interpreted as a lack of detection of opening of the circuit supplying the receiver. Then, the cyclically repeated sequence of signals forcing the closure and opening of the sampling connector contacts will not be interrupted and only after a delay time the circuit supplying the receiver will be closed.

It is preferred that the cyclically repeated sequence of signals forcing the closure and opening of the connector contacts has a total duration of at least 200 milliseconds and is repeated at least 10 times.

It is preferred that the time of recognising a series of two attempts to switch it on, between first and second attempt, is 5 to 40 seconds.

The essence of the system for controlling low-power electric energy receivers, connected by supply lines to a common energy source and equipped with individual switches, is that a terminal is connected in series in the supply line of each receiver. Each terminal is equipped with a terminal microcontroller comprising a data memory. In addition, each terminal has a switch for admitting power supply to the receiver, connected in the power supply line, from the side of the energy source. Further, it has a measuring block connected in the power supply line from the side of the receiver. Moreover, each terminal has a sampling block and/or a forcing block. The terminals are connected by signal lines to the server. The sampling block has a sampling connector which connects the sampling voltage power supply unit to the power supply line of the receiver, and is controlled from the terminal microcontroller, while in the forcing connector, one contact is connected to the forcing low-voltage power supply unit, and the other one to the terminal microcontroller input.

It is preferred that the forcing connector is located next to the receiver or on the housing of the terminal.

It is preferred that in the terminal, the sampling voltage power supply unit (23) is independent of the receiver power supply.

It is also preferred that in the terminal, the forcing voltage power supply unit (33) is independent of the receiver power supply.

An autonomous control program, implemented in the processors of the server and terminals, takes into account external events and the current state transmitted with signals between the server and the terminals of individual receivers. A system control program is developed so that the operation of the receivers is most effectively adapted to specific external events, including events in other remote actuators and in the power supply network.

The advantage of this solution is that communication between the terminals and the server is independent of the switching on and off of the receivers. This makes the system independent of interference in the transmission of data between the terminals and the server.

The method and system, according to the invention, allow a central, coordinated scheduling of switching on/off of many receivers distributed over a large area, and consequently it is possible to achieve a desired effect of limiting the peak power received by the receivers before their switching on and starting to operate. This also allows a central coordinated collection of information about switching on and operation of many receivers distributed over a large area, allowing switching on of other receivers by creating a feedback loop between receivers located in the same or in different facilities and by influencing the power demand, and by its precise prediction necessary to balance the energy in the distribution network.

Separation of terminals and receivers from servers, by communication means, allows separation of tasks of keeping individual elements of the system in motion, which gives the desired effect of lowering the competence barriers for the user of the receiver connected to the power supply by a terminal.

The centralised system for processing data about switching on and operation of receivers has a positive influence on the ability to identify properties of the receiver, which allows for the desired functionality of detecting failures in receivers and of responding by cutting off the power supply to the receiver and by signalling the state of emergency. The desired function is the possibility of signalling with the use of remote communication means of the central server, such as e-mail or SMS. The use of centralised servers allows the use of sources of information, external to the system, for controlling, for example from meteorological servers, which gives the desired property of system integration with a heterogeneous information environment.

### DESCRIPTION OF FIGURES IN THE DRAWING

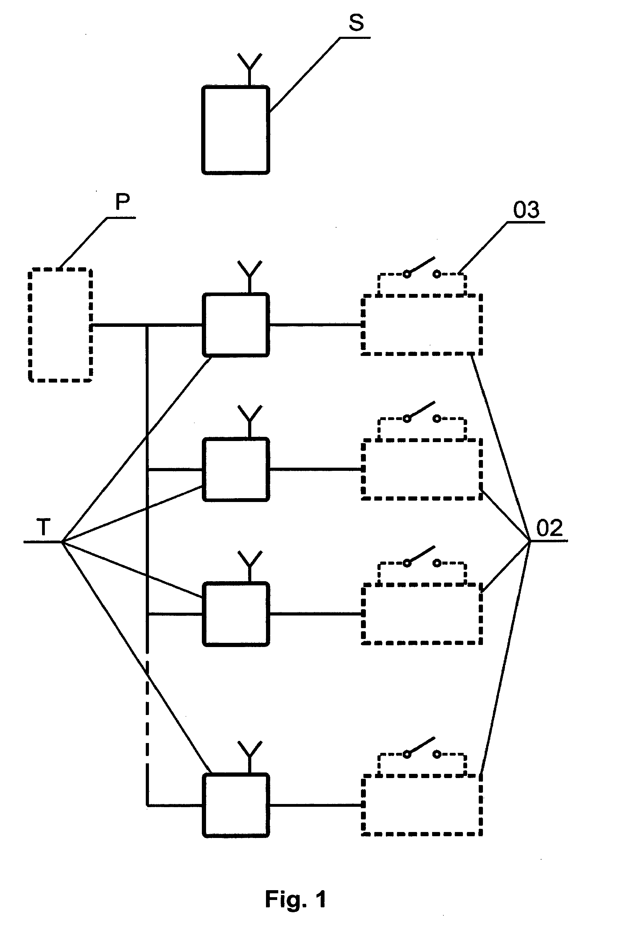

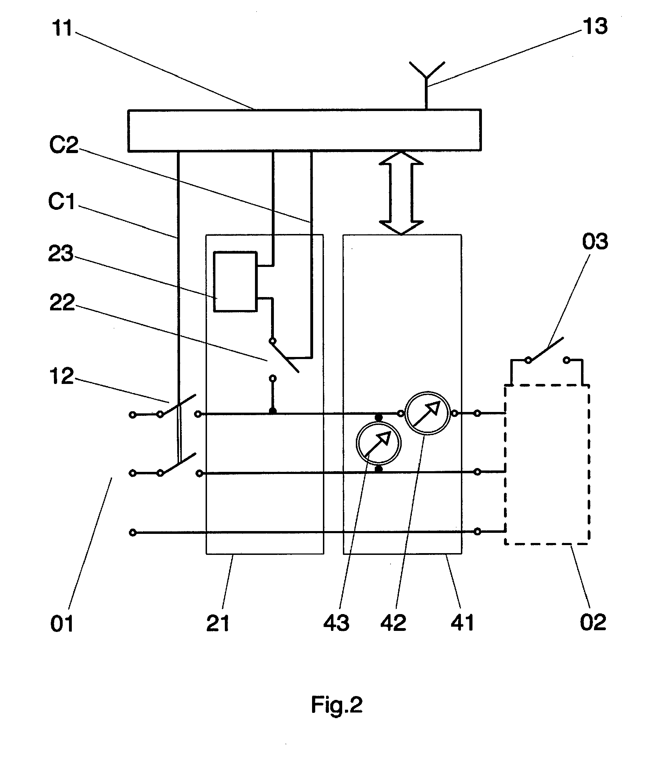

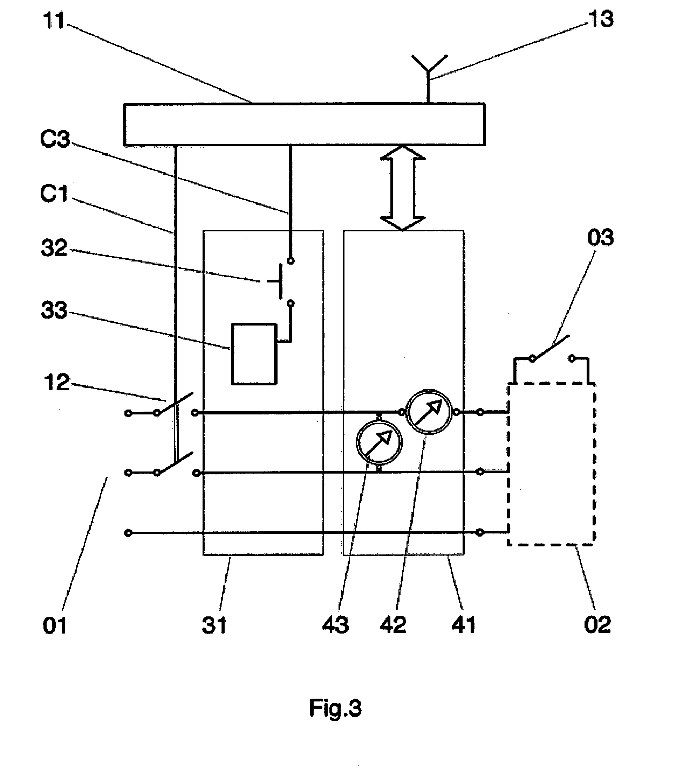

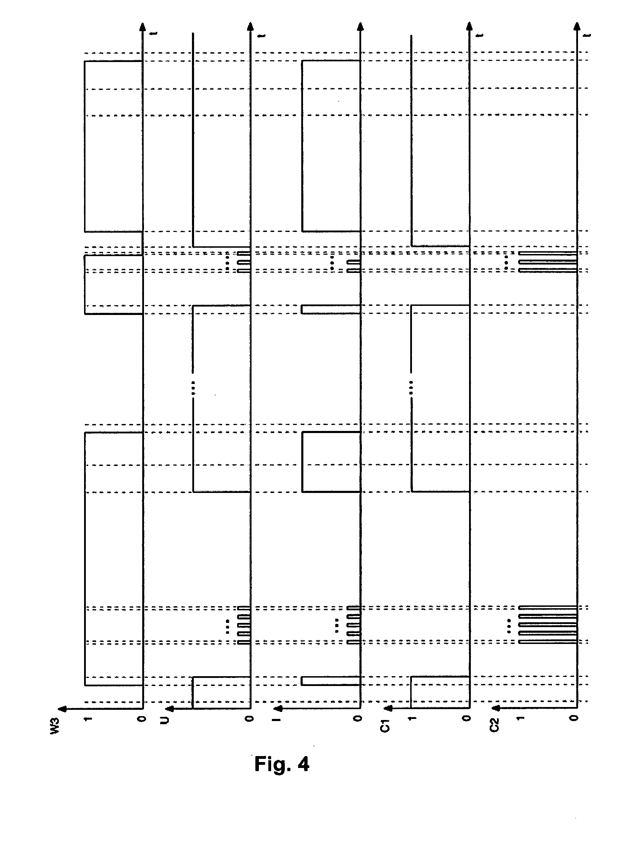

The method and system for controlling is explained in the example shown in the drawing. Fig. 1 is a block diagram of the system, Fig. 2 is a diagram of the terminal in a first example, Fig. 3 is a diagram of the terminal in a second example, and Fig. 4 shows timings.

The solution, according to the invention, is adapted to control electric energy receivers 02, connected by supply lines 01 to a common energy source P and equipped with individual receiver switches 03.

The method for controlling consists in that a terminal T, equipped with a switch 12 for admitting power supply to the receiver and with a terminal microcontroller 11 with a data memory, is included in each controlled receiver 02 in the power supply line 01. A schedule of admission periods and delay times for switching the receiver on is stored, wherein the controlled receiver 02 after the first attempt to switch it on, performed by the user, by means of the individual receiver switch 03, comes into operation at the time coinciding with the admission period if at the same time, in the terminal, a circuit supplying the receiver is closed. If not, then it is switched on after a delay time if in the terminal, the circuit supplying the receiver is closed by means of a signal from the microcontroller terminal 11. However, after the second attempt to switch the receiver on, which is initiated not later than after the time of recognising a series of two attempts to switch it on, the circuit supplying the receiver is forced to close with a signal from the terminal microcontroller 11, and therefore the receiver is forced to start operating.

The closure of the circuit supplying the receiver in the second attempt is initiated by means of an individual switch 03 belonging to the receiver. It may be also initiated by means of a forcing connector 32 belonging to the terminal T. The second attempt must take place at a time between 5 and 40 seconds after the first one. Switching on/of the forcing connector 32 changes the logic state of input of the terminal microcontroller 11 and causes immediate switching on of the power supply to the receiver, as shown in graph W3.

The schedule, stored in the terminal, is updated with signals which are transmitted by means of a communication link from a server S located in the facility comprising the controlled receivers, to the terminal microcontroller 11 at a time independent of moments of state changes in the receivers. Information about the state of the receiver is transmitted from the server S to the terminal microcontroller 11 by communication means at a time independent of moments of state changes in the receivers.

In the case where the terminal has a sampling block, after the first attempt to switch the receiver on, which did not make the receiver start operating, a cyclically repeated sequence of signals forcing the closure and opening of contacts of the sampling connector 22 is transmitted from the terminal microcontroller 11 via a sampling control signal line C2 to the contacts of the sampling connector 22. This sequence has a total duration of 200 milliseconds and is repeated 10 times. Thereby, the circuit supplying the receiver with sampling voltage is closed and opened. And at this time, current lout flowing through the circuit supplying the receiver with sampling voltage is measured. If during any of the aforementioned cycles of switching the sampling connector 22 on, the flow of current Iout>Istandby is not found, this state will be interpreted as detection of opening of the circuit supplying the receiver, and the source of sampling voltage is disconnected from the receiver contacts. Then, a signal switching the power supply on is transmitted from the terminal microcontroller 11 by means of a power supply control signal line C1 to the control contacts of the switch 12 for admitting power supply to the receiver. Then, if the contacts of the receiver switch 03 are closed again within less than the time of recognising a series of two attempts to switch it on, the circuit supplying the receiver is closed, and the terminal microcontroller 11 does not change the power supply control signal C1 until the end of the receiver operation.

In a different situation, in the terminal after the first attempt to switch the receiver 02 on, which did not make the receiver start operating, a cyclically repeated sequence of signals forcing the closure and opening of the contacts of the sampling connector 22 is transmitted from the terminal microcontroller 11 via the sampling control signal line C2 to the control contacts of the sampling connector 22, and thereby the circuit supplying the receiver with sampling voltage is closed and opened. At this time, current lout flowing through the circuit supplying the receiver with sampling voltage is measured. If during each of the aforementioned cycles of switching the sampling connector 22 on, the flow of current Iout>Istandby, resulting from the applied sampling voltage, is found, this state will be interpreted as a lack of detection of opening of the circuit supplying the receiver. Then, the cyclically repeated sequence of signals forcing the closure and opening of the contacts of the sampling connector 22 will not be interrupted and only after a delay time the circuit supplying the receiver will be closed.

In the control system, the terminal T is connected in series to each receiver in the power supply line 01. Each terminal is equipped with a terminal microcontroller 11 comprising a data memory. In addition, each terminal has a switch 12 for admitting power supply to the receiver, connected in the power supply line, from the side of the energy source. It also has a measuring block connected in the power supply line from the side of the receiver. The measuring block has a receiver current meter 42 and a supply voltage meter 43. Both meters are connected to the terminal microcontroller in order to transmit measurement results. All terminals T are connected by signal lines to the server S comprising a programmable controller. In the terminal, the sampling voltage power supply unit (23) is independent of the receiver power supply. Similarly, the forcing voltage power supply unit (33) is independent of the receiver power supply.

The system in the first example has the sampling block 21 in the terminal, and in the second example it has the forcing block 31. Also, a system having both the sampling and forcing blocks in the terminals can be created.

### FIRST EMBODIMENT

In addition to the aforementioned common elements of the system, the terminal has the sampling block 21 comprising the sampling connector 22 connecting the sampling voltage power supply unit 23 to the receiver power supply line 01. The connector is controlled from the terminal microcontroller 11.

### SECOND EMBODIMENT

In addition to the aforementioned common elements of the system, the terminal has the forcing block 31 comprising the forcing connector 32 controlled by the user, and giving the forcing control signal C3 directly to the terminal microcontroller. One contact of the forcing connector 32 is connected to the low-voltage power supply unit 33, and the other to the terminal microcontroller 11. Button of the forcing connector 32 can be located on the terminal housing or next to the receiver 02.

In exemplary arrangements, an industrial single board computer was used in the server S. In the terminals T, programmable controllers of PLC type, named LOGO, by Siemens, with outputs of relay contact type were used as microcontrollers 11, and connectors for variable operating voltage of 230 V were selected for them. Batteries with a nominal voltage of 4.8 V were used as the low-voltage power supplies in the terminals.

In addition, an electronic system with a GSM antenna 13 by an outside manufacturer was used to establish a connection to the Internet through communication over GSM network, and thereby a connection between the terminals and the server on the supported area for controlling the receivers.

### FIRST EMBODIMENT (OPERATION)

Having switched the system on, at moment t0, the terminal microcontroller initiates communication with the server. This time results from the schedule of communication between the terminal microcontroller and the server so that the communication takes place not less than with a predetermined frequency and in a manner allowing an unambiguous determination of the time of the next exchange of messages both on the side of the terminal microcontroller and the server. Times of establishing communication between the terminal microcontroller and the server may include other events in the system. During operation of the system, each change of state of the receivers and terminals is transmitted through microcontrollers in the terminals to the server.

From moment t0 to moment t1, supply voltage is applied to the contacts of the electric energy receiver. At moment t1, the user by first switching the receiver switch 03 off causes closure of its contacts. For a short time t2-t1, by means of the measuring system, i.e. current meter M1 and voltage meter M2, current flow is detected and power of the receiver being switched on is identified. If the moment t2 of completion of identifying the receiver parameters is within the period of t7start to t7stop, the supply voltage remains switched on and the receiver starts operating.

Otherwise, by means of the power supply control signal C1 of the switch 12 for admitting power supply to the receiver, power path is interrupted. In several successive time periods t3 to t4, ..., t5 to t6, by means of the sampling control signal C2 controlling the sampling connector 22, sampling voltage is applied to the receiver contacts and current lout is measured. If in each of the periods the flow of current Iout>Istandby, resulting from the applied sampling voltage, is found, the terminal microcontroller, by means of the power supply control signal C1 controlling the switch 12 for admitting power supply to the receiver, connects the receiver to the power supply network at moment t7 previously established in the server and sent to the terminal microcontroller. The receiver operates until moment t8 when it is switched off.

Between moments t8 and t9, the terminal microcontroller identifies transition of the receiver to the off state Iout<=Istandby. At moment t9, the terminal microcontroller transmits information on completion of the receiver operation to the server, whereas the switch 12 for admitting power supply to the receiver, controlled by the power supply control signal C1, remains in the state ensuring power supply for the receiver which does not receive or receives an insignificant amount of energy because of the opening of the contacts of individual receiver switch (03) or because of the transition to the standby state. For all new receivers, power Pstandby<1W.

In order to force the operation of the receiver, the user switches on the receiver again at moment t10 analogously to moment t1, causing the current flow Iout>Istandby. At moment t11 after identifying the receiver parameters, by means of the power supply control signal C1, contacts of the switch 12 for admitting power supply to the receiver are opened, thereby interrupting the current flow in the receiver. Because moment t11 is outside the range of t21 start to t21stop, contacts of the switch 12 have been opened. In subsequent periods t12 to t13 up to t14 to t15 with opened contacts of the switch 12 for admitting power supply to the receiver, the sampling voltage is applied to contacts of the electric energy receiver by means of the sampling connector 22 controlled by the sampling control signal C2. At moment t15, having detected too low current lout resulting from the applied voltage, the opening of the contacts of the individual receiver switch 03 is found. At the following moment t16, the receiver is connected to the power supply network by means of the switch 12 for admitting power supply to the receiver, controlled by the power supply control signal C1. At moment t18, after the end of the receiver operation, which resulted from the opening of contacts of the individual receiver switch or from the transition to standby state, the terminal proceeds to identification of this fact until moment t19 when it transmits an appropriate message to the server.

### SECOND EMBODIMENT (OPERATION)

In order to force the receiver operation, the user closes the contacts of the monostable forcing switch 32 on the housing of the terminal microcontroller, thereby causing transmission of the forcing control signal C3 to the microcontroller in the terminal at moment t21. This request remains active for a specified time from the loss of the forcing control signal C3 at moment t22 until moment t21stop = t22 + t-active. At moments t21 and t22, the terminal microcontroller transmits appropriate messages to the server. Until moment t23, supply voltage is applied incessantly to the contacts of the electric energy receiver. At moment t23, the contacts of the individual receiver switch 03 are closed under the action of the user. For a short time t24-t23, by means of the measuring system, current flow is detected and power of the receiver being switched on is identified. Moment t2 of completion of identifying the receiver parameters is within the period of t21 start to t21 stop, therefore the supply voltage remains switched on and the receiver starts operating. Until moment t25, when the user switches the electric energy receiver off, this receiver operates. Between moments t25 and t26, the terminal microcontroller operates as described above between moments t8 and t9.

### LIST OF DESIGNATIONS

- P: energy source
- T: terminal
- S: server
- 01: power supply line
- 02: receiver
- 03: individual receiver switch
- 11: terminal microcontroller
- 12: switch for admitting power supply to the receiver
- 13: GSM antenna
- 21: sampling block
- 22: sampling connector
- 23: sampling voltage power supply unit
- 31: forcing block
- 32: forcing connector
- 33: forcing voltage power supply unit
- 41: measuring block
- 42: current meter
- 43: voltage meter
- C1: power supply control signal
- C2: sampling control signal
- C3: forcing control signal

## Claims

1. A method for controlling low-power electric energy receivers, connected to a common energy source and equipped with individual receiver switches, **characterised in that** a terminal (T), equipped with a switch (12) for admitting power supply to the receiver and with a terminal microcontroller (11) with a data memory, in which a schedule of admission periods and delay times for switching the receiver, is included in each controlled receiver (02) in a supply line (01), wherein the controlled receiver (02) after the first attempt to switch it on, performed by the user, by means of an individual receiver switch (03), comes into operation at the time coinciding with the admission period if at the same time, in the terminal (T), a circuit supplying the receiver is closed, and after a delay time, when in the terminal, the circuit supplying the receiver is closed by means of a signal from the terminal microcontroller (11), however, after the second attempt to switch the receiver on, which is initiated not later than after the time of recognising a series of two attempts to switch it on, the circuit supplying the receiver is forced to close with a signal from the terminal microcontroller (11), and therefore the receiver is forced to come into operation.

2. The method according to claim 1, **characterised in that** the closure of the circuit supplying the receiver in the second attempt is initiated by means of the individual switch (03) belonging to the receiver (02).

3. The method for controlling, according to claim 1, **characterised in that** the closure of the circuit supplying the receiver in the second attempt is initiated by means of a forcing connector (32) belonging to the terminal (T), the logic state of the input of the terminal microcontroller (11) is changed, which causes an immediate switching on of power supply to the receiver (02).

4. The method for controlling, according to claim 1, **characterised in that** the schedule, stored in the terminal, is updated with signals which are transmitted from a server (S) located in/or outside the facility comprising the controlled receivers, to the terminal microcontroller (11) in the terminal (T) at a time independent of moments of state changes in the receivers.

5. The method for controlling, according to claim 1, **characterised in that** the schedule, stored in the terminal, is updated with signals which are transmitted to the terminal (T) by a communication link.

6. The method for controlling, according to claim 1, **characterised in that** the information about the state of the receiver from the server (S) to the terminal microcontroller (11) is transmitted at a time independent of moments of state changes in the receivers.

7. The method for controlling, according to claim 1, **characterised in that** information about the receiver state is transmitted by communication means from the terminal microcontroller (11) to the server (S).

8. The method for controlling, according to claim 1, **characterised in that** in the terminal after the first attempt to switch the receiver (02) on, which did not make the receiver start operating, a cyclically repeated sequence of signals forcing the closure and opening of contacts of the connector (22) is transmitted from the terminal microcontroller (11) via a sampling control signal line (C2) to the sampling connector (22), thereby, the circuit supplying the receiver with sampling voltage is closed and opened, at this time, current (lout) flowing through the circuit supplying the receiver with sampling voltage is measured, and if during any of the aforementioned cycles of switching on the connector (22), the flow of current Iout>Istandby is not found, this state will be interpreted as detection of opening of the circuit supplying the receiver, and the source of sampling voltage is disconnected from the receiver, then a signal switching the power supply on is transmitted from the terminal microcontroller (11) by means of a power supply control signal line (C1) to the contacts of the switch (12) for admitting power supply to the receiver, and then, if the contacts of the individual receiver switch (03) are closed again within less than the time of recognising a series of two attempts to switch it on, the circuit supplying the receiver is closed, and the terminal microcontroller does not change the power supply control signal C1 until the end of the receiver operation.

9. The method for controlling, according to claim 1, **characterised in that** in the terminal after the first attempt to switch the receiver on, which did not make the receiver start operating, a cyclically repeated sequence of signals forcing the closure and opening of contacts of the sampling connector (22) is transmitted from the terminal microcontroller (11) via the sampling control signal line (C2) to contacts of the sampling connector (22), and thereby the circuit supplying the receiver with sampling voltage is closed and opened, at this time, current lout flowing through the circuit supplying the receiver with sampling voltage is measured, and if during each of the aforementioned cycles of switching on the sampling connector (22), the flow of current Iout>Istandby, resulting from the applied sampling voltage, is found, this state will be interpreted as a lack of detection of opening of the circuit supplying the receiver, the cyclically repeated sequence of signals forcing the closure and opening of contacts of the sampling connector (22) will not be interrupted and only after a delay time the circuit supplying the receiver will be closed.

10. The method for controlling, according to claims 10 and 11, **characterised in that** the cyclically repeated sequence of signals forcing the closure and opening of contacts of the sampling connector (22) has a total duration of at least 200 milliseconds and is repeated at least 10 times.

11. The method for controlling, according to claim 1, **characterised in that** the time of recognising a series of two attempts to switch on, between the first and second attempt, is set at 5 to 40 seconds.

12. A system for controlling low-power electric energy receivers, connected to a common energy source by power supply lines and equipped with individual switches, **characterised in that** the terminal (T) is connected in series in the power supply line (01) of each receiver, wherein each terminal is equipped with a terminal microcontroller (11) comprising a memory, in addition each terminal has a switch (12) for admitting power supply to the receiver, connected in the power supply line, from the side of the energy source, and a measuring block connected in the line supplying the receiver from the side of the receiver, and in addition each terminal has a sampling block (21) or/and a forcing block (31), wherein the terminals are connected by signal lines to the server (S), wherein the sampling block (21) has the sampling connector (22) connecting the sampling voltage power supply unit (23) to the receiver power supply line (01) and is controlled from the terminal microcontroller (11), however one contact of the forcing connector (32) is connected to the forcing low-voltage power supply unit (33), the other one to the input of the terminal microcontroller (11).

13. The system for controlling, according to claim 12, **characterised in that** the forcing connector (32) is located next to the receiver or on the terminal housing.

14. The system, according to claim 1, **characterised in that** in the terminal, the sampling voltage power supply unit (23) is independent of the receiver power supply.

15. The system, according to claim 1, **characterised in that** in the terminal, the forcing voltage power supply unit (33) is independent of the receiver power supply.
